Europäisches Patentamt

European Patent Office

Office européen des brevets

(11) Publication number: **0 079 678**

**B1**

(12) **EUROPEAN PATENT SPECIFICATION**

(45) Date of publication of patent specification: **04.09.85**

(51) Int. Cl.⁴: **C 04 B 35/58**

(21) Application number: **82305421.8**

(22) Date of filing: **12.10.82**

(54) **Method for sintering silicon nitride.**

(30) Priority: **12.10.81 JP 163278/81**
**31.08.82 JP 152113/82**

(43) Date of publication of application:
**25.05.83 Bulletin 83/21**

(45) Publication of the grant of the patent:
**04.09.85 Bulletin 85/36**

(84) Designated Contracting States:
**DE FR GB IT**

(56) References cited:
GB-A-2 035 981
US-A-4 113 830

(73) Proprietor: **SUMITOMO ELECTRIC INDUSTRIES LIMITED**
**No. 15, Kitahama 5-chome Higashi-ku**
**Osaka-shi Osaka-fu (JP)**

(72) Inventor: **Higuchi, Matsuo c/o Itami Works**
**Sumitomo Electric Ind. Ltd. 1-1, Koyakita 1-chome**
**Itami-shi Hyogo (JP)**
Inventor: **Honda, Masaaki c/o Itami Works**
**Sumitomo Electric Ind. Ltd. 1-1, Koyakita 1-chome**
**Itami-shi Hyogo (JP)**
Inventor: **Tsukada, Hiroshi c/o Itami Works**
**Sumitomo Electric Ind. Ltd. 1-1, Koyakita 1-chome**
**Itami-shi Hyogo (JP)**
Inventor: **Nishimoto, Tatsuya c/o Itami Works**
**Sumitomo Electric Ind. Ltd. 1-1, Koyakita 1-chome**
**Itami-shi Hyogo (JP)**
Inventor: **Kamijo, Eiji c/o Itami Works**
**Sumitomo Electric Ind. Ltd. 1-1, Koyakita 1-chome**
**Itami-shi Hyogo (JP)**

(74) Representative: **Keltie, David Arthur et al**
**Baron & Warren 18 South End Kensington**
**London W8 5BU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# 0 079 678

## Description

The invention relates to the method of sintering silicon nitride for obtaining a sintered compact of silicon nitride having advanced high temperature strength and high density.

Ceramics, particularly as a heat resisting material, has been extensively developed in recent years, and silicon nitride ($Si_3N_4$) in particular is well known among the covalent compounds having stabilized heat resistance at high temperatures.

Generally, ceramics is produced by pressing and sintering the powder material. Silicon nitride, however, is difficult to be sintered comparing with the ceramics of general oxides. Thus it is difficult to obtain a sintered compact of high density from $Si_3N_4$ powder only.

In case of $Si_3N_4$ powder, therefore, it is sintered with a sintering additives such as the powdered oxides of MgO, $Al_2O_3$, $Y_2O_3$, $CeO_2$, BeO, etc. and/or the nitrides and carbides of the IVa, Va, VIa metals of the periodic table.

The conventional method wherein $Si_3N_4$ powder mixed with a sintering additives is pressed and sintered in a vacuum or normal pressure is industrially useful for its low cost. It has a disadvantage, however, in that the micro pores remain in the sintered compact and it is very difficult to obtain a $Si_3N_4$ sintered compact of high density.

The hot press method of sintering $Si_3N_4$ powder under high pressure at a high temperature enables to obtain a sintered compact of higher density. This method, however, has a disadvantage in that the strength is reduced at higher temperature and the sintering cost is high.

Since the reduction in the high temperature strength is attributable to the growth of a low melting point material on the $Si_3N_4$ powder interface due to the sintering additives, the disadvantage is unavoidable insofar as the sintering additives is used.

Various other methods have been tried, for example, the method of sintering in a high pressure gas atmosphere by reducing the mixing ratio of the sintering additives or without adding the sintering additives, the method of shock compacting that sinter after imparting a high pressure to powder instantaneously. All these methods, however, have been industrially unsuccessful because of the disadvantages, such as high sintering cost, the phenomenon of reduction in the high temperature strength, etc.

In view of the foregoing, the inventors concerned have accomplished the invention after a series of tests wherein $Si_3N_4$ powder mixed with the sintering additives was pressed and sintered under varied conditions, i.e. in a vacuum, partial pressure atmosphere, high pressure atmosphere, and at different temperatures, thereby enabling to obtain a $Si_3N_4$ sintered compact having advanced high temperature strength and high density even when sintering additives are used.

The present invention consists in a method for sintering silicon nitride wherein silicon nitride powder is mixed with sintering additives and pressed and then subjected to a sintering process in which the temperature is raised and the pressure is raised from a subatmospheric to a superatmospheric pressure, characterised in that the sintering is carried out in a first stage at a vacuum below $10^{-3}$ atm (approx. $10^{-4}$ MPa), a second stage at a pressure of $10^{-3}$ 0.9 atm (approx. $10^{-4}$—0.09 MPa) and a third stage at a pressure above 1 atm. (approx. 0.1 MPa).

The invention will hereinunder be described in detail in reference to the accompanying drawings.

Fig. (A) is a chart showing the interrelation between the pressure of sintering atmosphere and the sintering hour. Fig. 1(B) is a chart showing the interrelation between the sintering temperature and the sintering hour. Fig. 2(A) is a charge showing the interrelation between the pressure of sintering atmosphere and the sintering hour of another example. Fig. 2(B) is a charge showing the interrelation between the sintering temperature and the sintering hour. Fig. 3 is a diagram for describing the sintering method according to the invention, wherein the solid line 1 shows the temperature while the dotted line 2 shows the pressure of atmosphere, respectively.

It is possible by means of the invention to obviate the defect of the conventional sintered compact, i.e. reduction of the high temperature characteristics, and to obtain $Si_3N_4$ sintered compact having high density and advanced high temperature strength.

The sintering method according to the invention will hereinunder be described in more detail.

Silicon nitride is mixed with sintering additives, preferably comprising at least one kind selected from among the metallic oxides of Li, Be, Mg, Al, Ti, Ca, Y, Zr, Ba and Ce and/or at least one kind selected from among the nitrides and carbides of the IVa, Va, VIa metals of the periodic table. The mixture is carefully blended, pressed and sintered in the furnace by elevating the temperature.

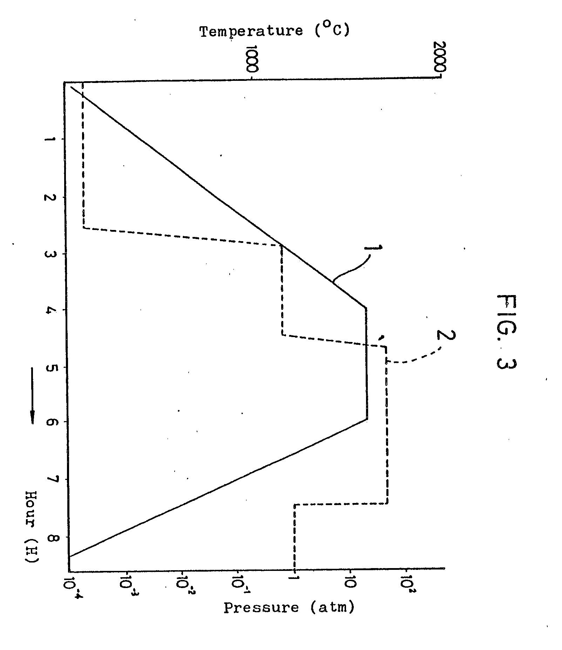

The process from the elevation of temperature to the completion of sintering, for example, comprises the following three stages as shown in Fig. 3.

(1) a vacuum below $10^{-3}$ atm (approx. $10^{-4}$ MPa) for the first stage of 0—1100°C

(2) an atmosphere having a nitrogen pressure of $10^{-3}$—0.9 atm (approx. $10^{-4}$—0.09 MPa) for the second stage of 1100—1800°C

(3) a high pressure nitrogen atmosphere above 1 atm (approx. 0.1 MPa) intermediately in the maintenance of the sintering temperature of 1800°C.

In the first stage (1), the vacuum below $10^{-3}$ atm ($10^{-4}$ MPa) enables to remove oxygen and water absorbed in the pressed $Si_3N_4$ powder containing the sintering additives; in the second stage (2), the

2

oxidized layer on the surface of the pressed powder is removed, while the interface composition is controlled so as to restrain the coarsening growth of $Si_3N_4$ crystals and grow fine and homogeneous crystals of $Si_3N_4$; and in the third stage (3), the high pressure atmosphere above 1 atm (0.1 MPa) helps complete the sintering while restraining the decomposition of $Si_3N_4$.

Thus a sintered compact of high density and advanced high temperature strength and high reliability (for example high Weibull modulus) is obtainable by varying the sintering atmosphere by three stages.

Sintering of $Si_3N_4$ progresses most conspicuously at 1100—1800°C in the second stage, and it is preferable that the pressure of the atmospheric is as small as possible so that the sintered compact is free from the residue of micro pores. $N_2$ gas, $N_2+H_2$ mixed gas, $N_2+CO$ mixed gas or $N_2+H_2+CO$ mixed gas is effective as a pressure atmosphere of $10^{-3}$—0.9 atm (approx. $10^{-4}$—0.09 MPa) in the second stage, while the high pressure atmosphere above 1 atm (approx. 0.1 MPa) in the third stage can comprise the ordinary pressure atmosphere of 2—150 atom (approx. 0.2—15 MPa) or hot isotactic pressure (HIP) of approximately 2000 atmosphere degrees, etc. The same effect can be obtained even when the atmosphere is controlled in the same way by using hot press. $N_2$ gas, Ar gas or their mixed gas are effective as the third stage atmosphere.

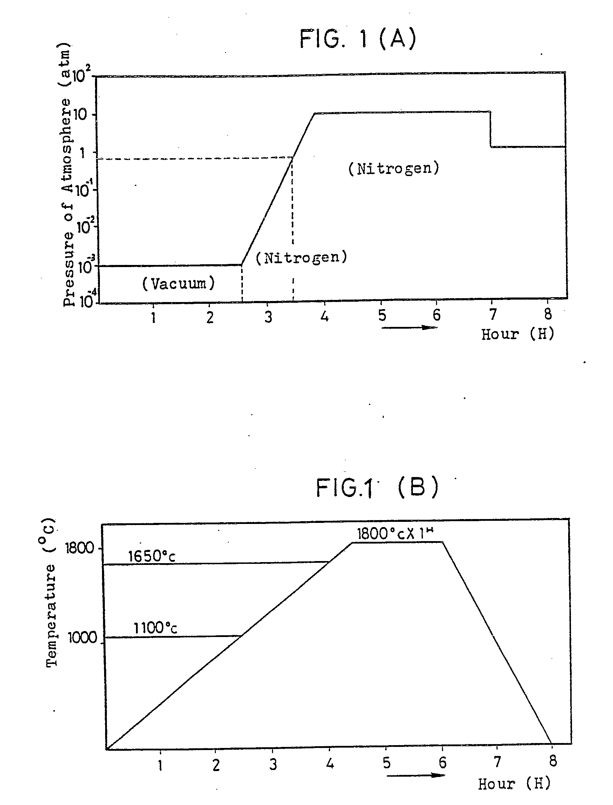

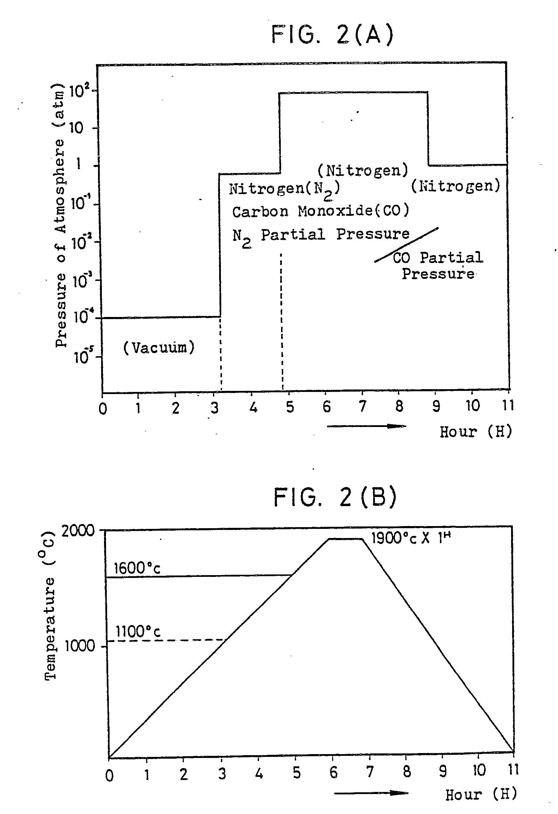

Figs. 1 and 2 show the interrelation between the pressure of atmosphere, sintering hour and sintering temperature in the heating process according to the invention. Fig. 1(A) shows the interrelation between the pressure of atmosphere and sintering hour when $N_2$ gas is employed as a pressure atmosphere in the second stage, while Fig. 1(B) shows the relative interrelation between the sintering temperature and sintering hour. The diagrams cover Example 1 to be described hereinafter.

Fig. 2(A) and (B) show the same interrelations as in Fig. 1(A) and (B) in which the pressure atmosphere of the second stage is replaced by a mixed gas of $N_2$ gas and CO gas. The diagrams cover the Example 3 to be described hereinafter.

The invention will now be described in detail with reference to the following examples.

Example 1

Powders of $Si_3N_4$ (made by Stark & Co., Ltd., West Germany) 100 g containing α type above 90% and MgO 5 g were mixed and pulverized by a ball mill.

The mixture was formed into a plate 50 mm in length, 25 mm in width and 10 mm in thickness under a pressure of 2 t/cm² (196 MPa), and the plate thus obtained was placed in the sintering furnace.

After the furnace had been made vacuous ($1.3 \times 10^{-4}$ atm 13.17 Pa), the temperature was elevated until it reached 1100°C. $N_2$ gas was introduced at a flux of 5 l/min with the pressure set at 0.6 atm (60.8 kPa) by controlling the exhaust valve. The temperature was further elevated until it reached 1600°C. The exhaust valve was closed and $N_2$ gas was introduced until the pressure was controlled to 10 atm (1013 kPa). The temperature in the furnace was elevated to and held at 1800°C for 1 hour.

Then the temperature was lowered to 1000°C, the pressure of atmosphere was reduced to 1 atm (101.3 kPa), and the temperature was lowered continuously.

The sintered compact was taken out of the furnace after it was fully cooled. The characteristics of the sintered compact thus obtained are as shown in Table 1.

By way of comparison, there are shown sintered compacts made of the same powder as in Example 1 and sintered under different conditions: in $N_2$ gas atmosphere of 1 atm (101.3 kPa) and 10 atm (1013 kPa) from the initial stage of temperature elevation, and in a vacuum until 1100°C and then in $N_2$ gas atmosphere of 10 atm (1013 kPa) after 1100°C.

TABLE 1

| | | Example 1 | Reference sample 1 | Reference sample 2 | Reference sample 3 |
|---|---|---|---|---|---|
| Process of temperature elevation | Atmosphere at 0—1100°C | $1.3 \times 10^{-4}$ atm vacuum (13.17 Pa) | $N_2$ gas 1 atm 101.3 kPa | $N_2$ gas 10 atm (1013 kPa) | vacuum |
| | 1100—1600°C | $N_2$ gas 0.6 atm (60.8 kPa) | " | " | $N_2$ gas 10 atm (1013 kPa) |
| | 1600—1800°C | $N_2$ gas 10 atm (1013 kPa) | " | " | " |
| Characteristics of sintered compact | Density (g/cm³) | 3.2 | No sintered compact was formed due to decomposition of $Si_3N_4$ | 3.0 | 3.1 |
| | Oxygen Content (wt%) | 2.5 | | 5.0 | 2.9 |
| | Bending strength (MPa) | | | | |
| | Room Temperature | 833 | | 686 | 735 |
| | 1200°C | 745 | | 578 | 705.6 |
| | 1400°C | 518 | | 372.4 | 470.4 |

Example 2

Powders of $Si_3N_4$ (made by Stark & Co., Ltd., West Germany) 100 g containing α type above 90% and $Al_2O_3$ 5 g, TiN 5 g, were mixed and pulverized by a ball mill.

The mixture was formed into a plate 50 mm in length, 25 mm in width and 10 mm in thickness under a pressure of 196 MPa and the plate thus produced was placed in the sintering furnace.

After the furnace had been made vacuous ($1.3\times10^{-4}$ atm 13.17 Pa), the temperature was elevated until it reached 1100°C. $N_2$ gas introduced at a flux of 5 l/min, the pressure being set at 0.6 atm (60.8 kPa) by controlling the exhaust valve. The temperature was further elevated, and the exhaust valve was closed in the middle of the sintering keep at 1800°C. The pressure of the atmosphere was controlled to 10 atm (1013 kPa) by introducing $N_2$ gas, and the sintering was completed at this temperature.

After the temperature inside the furnace had been lowered to 1200°C, the pressure of atmosphere was reduced to 1 atm (101.3 kPa) while the temperature was further lowered continuously.

The sintered compact was taken out of the furnace after it had been completely cooled. The characteristics of the sintered compact thus obtained are as shown in Table 2.

TABLE 2

| | | | Example 2 |
|---|---|---|---|
| Process of temperature elevation | | Atmosphere at 0—1100°C | $1.3\times10^{-4}$ (13.17 Pa) atm vacuum |
| | | 1100—1800°C | $N_2$ gas 0.6 atm (60.8 kPa) |
| | | 1800°C (latter half) | $N_2$ gas 10 atm (1013 kPa) |
| Characteristics of sintered compact | | Density g/cm³ | 3.4 |
| | | Oxygen Content (wt%) | 2.2 |
| | | Bending Strength (MPa) | |
| | | Room Temperature | 852.6 |
| | | 1200°C | 764.4 |
| | | 1400°C | 588 |

From the Table above, it is understood that the same effect can be obtained if additive element like sintered additives are changed.

Example 3

A sintered compact of $Si_3N_4$ was obtained through the same process as in Example 1 except that the pressure was set at 0.8 atm (81.06 kPa) by synchronously introducing $N_2$ gas at a flux of 5 l/min and $H_2$ gas at a flux of 2 l/min instead of setting the pressure at 0.6 atm (60.8 kPa) by introducing $N_2$ gas at a flux of 5 l/min in the temperature elevation process from 1100 to 1600°C as in Example 1.

The physical properties of the sintered compact are as shown in Table 3.

TABLE 3

| | | Example 3 |
|---|---|---|
| **Process of temperature elevation** | Atmosphere at<br>0—1100°C | $1.3 \times 10^{-4}$ atm (13.17 Pa) vacuum |
| | 1100—1600°C | $N_2$<br>⟍<br>  gas 0.8 atm (81.06 kPa)<br>╱<br>$H_2$ |
| | 1600—1800°C | $N_2$ gas 10 atm (1013 kPa) |
| **Characteristics of sintered compact** | Density (g/cm$^3$) | 3.4 |
| | Oxygen Content (wt%) | 2.0 |
| | Bending Strength (MPa) | |
| | Room Temperature | 842.8 |
| | 1200°C | 774.2 |
| | 1400°C | 637 |

Tables 1 to 3 show that Examples 2 and 3 having smaller oxygen content compared with Example 1 have greater high temperature bending strength.

### Claims

1. A method for sintering silicon nitride wherein silicon nitride powder is mixed with sintering additives and pressed and then subjected to a sintering process in which the temperature is raised and the pressure is raised from a sub-atmospheric to a superatmospheric pressure, characterised in that the sintering is carried out in a first stage at a vacuum below $10^{-3}$ atm (approx. $10^{-4}$ MPa), a second stage at a pressure of $10^{-3}$—0.9 atm (approx. $10^{-4}$—0.09 MPa) and a third stage at a pressure above 1 atm. (approx. 0.1 MPa).

2. The method for sintering silicon nitride as defined in claim 1 characterised in that the sintering additives include at least one oxide of a metal selected from Li, Be, Mg, Al, Ca, Ti, Y, Zr, Ba and Ce.

3. The method for sintering silicon nitride as defined in claim 1 or claim 2 characterised in that the sintering additives include at least one nitride or carbide of a metal of group IVa, Va or VIa of the periodic table.

4. The method for sintering silicon nitride as defined in any preceding claim characterised in that the gas of the second stage atmosphere is $N_2$ gas, $N_2 + H_2$ mixed gas, $N_2 + CO$ mixed gas or $N_2 + H_2 + CO$ mixed gas.

5. The method of sintering silicon nitride as defined in any preceding claim characterised in that the gas of the third stage atmosphere is $N_2$ gas; Ar gas or a mixture thereof.

### Patentansprüche

1. Verfahren zum Sintern von Siliziumnitrid, bei dem Siliziumnitridpulver mit Sinteradditiven gemischt und dann einem Sinterprozeß unterworfen wird, wobei die Temperatur angehoben und der Druck von einem unteratmosphärischen auf einen überatmosphärischen Druckwert erhöht wird, dadurch gekennzeichnet, daß das Sintern auf einer ersten Stufe bei einem Vakuum unterhalb $10^{-3}$ atm (etwa $10^{-4}$ MPa), auf einer zweiten Stufe bei einem Druck von $10^{-3}$—0,9 atm (etwa $10^{-4}$—0,09 MPa) und auf einer dritten Stufe bei einem Druck oberhalb 1 atm (etwa 0,1 MPa) ausgeführt wird.

2. Verfahren zum Sintern von Siliziumnitrid nach Anspruch 1, dadurch gekennzeichnet, daß die Sinteradditive wenigstens ein Oxyd eines Metalles einschließen, das aus Lithium, Beryllium, Magnesium, Aluminium, Kalzium, Titan, Yttrium, Zirkonium, Barium und Cer ausgewählt wird.

3. Verfahren zum Sintern von Siliziumnitrid nach Anspruch 1 oder 2, dadurch gekennzeichnet, daß die Sinteradditive wenigstens ein Nitrid oder Karbid eines Metalles der Gruppe IVa, Va, VIa des periodischen Systems der Elemente einschließt.

4. Verfahren zum Sintern von Siliziumnitrid nach einem der vorangehenden Ansprüche, dadurch gekennzeichnet, daß das Gas de Zweiten Atmosphärenstufe ein N$_2$-Gas, ein N$_2$+H$_2$-Mischgas, ein N$_2$+CO-Mischgas oder ein N$_2$+H$_2$+CO-Mischgas ist.

5. Verfahren zum Sintern von Siliziumnitrid nach einem der vorangehenden Ansprüche, dadurch gekennzeichnet, daß das Gas der dritten Atmosphärenstufe ein N$_2$-Gas, ein Ar-Gas oder ein Gemisch daraus ist.

## Revendications

1. Procédé pour le frittage de nitrure de silicium, dans lequel une poudre de nitrure de silicium est mélangée à des additifs de frittage et comprimée, puis soumise à une opération de frittage dans laquelle on élève la température et on élève la pression d'une pression inférieure à la pression atmosphérique à une pression supérieure à la pression atmosphérique, caractérisé en ce que le frittage est réalisé dans une première étape sous vide inférieur à 10$^{-3}$ atm (env. 10$^{-4}$ MPa), une deuxième étape à une pression de 10$^{-3}$—0,9 atm (env. 10$^{-4}$—0,09 MPa), et une troisième étape à une pression supérieure à 1 atm. (env. 0,1 MPa).

2. Procédé pour le frittage de nitrure de silicium selon la revendication 1, caractérisé en ce que les additifs de frittage comprennent au moins un oxyde d'un métal choisi parmi Li, Be, Mg, Al, Ca, Ti, Y, Zr, Ba et Ce.

3. Procédé pour le frittage de nitruure de silicium selon la revendication 1 ou la revendication 2, caractérisé en ce que les additifs de frittage comprennent au moins un nitrure ou un carbure d'un métal du groupe IVa, Va ou VIa du tableau périodique.

4. Procédé pour le frittage de nitrure de silicium selon l'une quelconque des revendications 1 à 3, caractérisé en ce que le gaz de l'atmosphère de la deuxième étape est du N$_2$ gazeux, un gaz mixte N$_2$+H$_2$, un gaz mixte N$_2$+CO ou un gaz mixte N$_2$+H$_2$+CO.

5. Procédé pour le frittage de nitrure de silicium selon l'une quelconque des revendications 1 à 4, caractérisé en cu que le gaz de l'atmosphère de la troisième étape est du N$_2$ gazeux; de l'Ar gazeux ou un de leurs mélanges.

## FIG. 1 (A)

Pressure of Atmosphere (atm) vs Hour (H)

(Nitrogen)

(Nitrogen)

(Vacuum)

## FIG.1 (B)

Temperature (°C) vs Hour (H)

1800°c X 1ᴴ

1650°c

1100°c

1

## FIG. 2(A)

## FIG. 2(B)

# FIG. 3